# EUROPEAN PATENT SPECIFICATION

(11) **EP 4 308 822 B1**
(45) Date of publication and mention of the grant of the patent: **11.06.2025**
(21) Application number: 22710401.5
(22) Date of filing: 07.03.2022
(51) Int. Cl.: F16B 13/14, F16B 25/00, F16B 5/02, F16B 39/22

(54) **METHOD AND LEVELLING SCREW FOR INSTALLING AN ATTACHMENT PART**
VERFAHREN UND NIVELLIERSCHRAUBE ZUR MONTAGE EINES BEFESTIGUNGSTEILES
PROCÉDÉ ET VIS DE NIVELLEMENT POUR INSTALLER UNE FIXATION

(30) Priority: 17.03.2021 EP 21163156
(43) Date of publication of application: 24.01.2024
(73) Proprietor: Hilti Aktiengesellschaft, 9494 Schaan (LI)
(72) Inventor: ZILTENER, Michael, 8854 Siebnen (CH); GUTENSOHN, Markus, 6845 Hohenems (AT)
(74) Representative: Hilti Aktiengesellschaft Corporate Intellectual Property
(86) International application number: PCT/EP2022/055689
(87) International publication number: WO 2022/194588

(56) References cited:
- EP-B1- 1 710 453
- US-A- 3 897 713

## Description

The invention relates to a method for installing an attachment part according to the preamble of claim 1.

In order to level a post or a railing during installation, nuts mounted on a threaded rod are commonly used. The nuts provide a support for the item that is to be levelled, and they can be adjusted by rotation. However, using levelling nuts requires a gap between the base and the item that is to be levelled which is sufficiently wide so as to receive the nut. In addition, the nut has to accessible by a torqueing tool.

EP1710453 A1 discloses a method according to the preamble of claim 1.

It is an object of the invention to provide a method for installing an attachment part that can provide particularly fast, easy and versatile levelling on a concrete or masonry substrate.

This object is achieved by a method for installing an attachment part according to claim 1. Dependent claims refer to preferred embodiments of the invention.

Accordingly, there is provided a method for installing an attachment part on a concrete or masonry base, which base is provided with a bore, in which
- a hardenable grout is arranged within the bore,
- a levelling screw, which has an attachment part support for supporting the attachment part, a shank, which is connected to the attachment part support, and at least one first screw thread, which is arranged on the shank, is provided,
- the shank is screwingly inserted into the bore and into the hardenable grout that is arranged within the bore, wherein the at least one first screw thread taps the base as the shank is screwingly inserted into the bore,
- following the insertion of the shank into the bore and into the hardenable grout that is arranged within the bore, partially unscrewing the levelling screw out of the bore, thereby raising the attachment part support away from the base, and
- placing the attachment part on the attachment part support.

Amongst others, the invention is based on the finding that a grout shell can stabilize a bore in a concrete or masonry substrate, such that it is possible to screw a concrete-tapping or masonry-tapping levelling screw into and out of the substrate, preferably repeatedly, for levelling purposes, whilst maintaining particularly efficient engagement with the substrate. Based on this finding, it is proposed to provide a levelling screw intended to be anchored in a concrete or masonry base, the levelling screw having a support structure for supporting the attachment part. Accordingly, levelling is performed by a screw mechanism formed between the levelling screw on the one hand and the concrete or masonry base on the other hand. Accordingly, no levelling nut is required between the attachment part and the base, which can permit a particularly compact assembly. Thus, particularly fast, easy and versatile levelling can be achieved.

The attachment part could for example be a base plate, e.g. of a post or a railing. The hardenable grout can, for example, be a radically hardenable grout or an epoxy grout. The hardenable grout can be arranged within the bore in a readily mixed state, or in an unmixed state. In the latter case, the insertion of the levelling screw might cause initial mixing of the grout (preferably also rupturing of the containers that contain the grout components). The bore is preferably generally cylindrical. In particular, it might be manufactured by boring.

The first screw thread is connected to the shank and winds around the shank, which shank is, in particular, generally cylindrically. The first screw thread and the shank might be monolithic, but they might also be separate parts. Additional screw threads might be arranged on the shank. The at least one first screw thread taps the base as the shank screw is screwingly inserted into the bore, i.e. the at least one first screw thread creates a mating thread in the wall of the bore as the shank screw is screwingly inserted into the bore. Tapping could include cutting action, reaming action, or both.

The levelling screw is unscrewed out of the bore after the shank has been is screwingly inserted into the bore and into the hardenable grout that is arranged within the bore. The levelling screw is only partially unscrewed, i.e. the shank remains within the bore and preferably also within the grout at the end of this process. Unscrewing preferably includes rotating the shank in the unscrewing direction of the at least one first screw thread. Since the shank is connected to the attachment part support, unscrewing of the shank moves the attachment part support away from the base.

Throughout this document - wherever the terms "axially", "longitudinally", "radially" and "circumferentially" are used, they can refer, in particular, to the longitudinal axis of the shank, which might coincide with the longitudinal axis of the mounting stud if present.

Preferentially, the attachment part is placed on the attachment part support before the levelling screw is partially unscrewed out of the bore. Accordingly, the attachment part support can be raised together with the attachment part resting thereon away from the base as the levelling screw is unscrewed out of the bore. This can further facilitate the method.

Preferably, the levelling screw has a mounting stud, and the mounting stud is arranged in an attachment part hole that is provided within the attachment part. This can provide particularly easy and reliably connection between the attachment part and the levelling screw. The mounting stud is connected to the attachment part support. The shank and the mounting stud, respectively, project from the attachment part support on opposite sides thereof. In particular, the mounting stud and the shank can be arranged coaxially.

Preferentially, a drive is provided on the mounting stud, wherein insertion of the shank into the bore and into the hardenable grout that is arranged within the bore includes rotating the levelling screw by imparting torque on the drive. This can further facilitate installation. In particular, the drive is arranged at a sufficient large distance from the attachment part support so that the drive is accessible when the mounting stud is arranged in the attachment part hole and when the attachment part rests on the attachment part support. This can further facilitate handling. In particular, the drive can be arranged at a rear end of the mounting stud (which rear end is located distal to the attachment part support), which improves versatility. The drive can for example be a hex drive or another type of polygonal drive. It can be both an internal drive or an external drive, but an external drive might be advantageous. The torque might be imparted on the drive by means of a manual wrench or a power tool, which might also be part of a robot.

Advantageously, a nut is placed on the mounting stud so as to clamp the attachment part in between the attachment part support and the nut, in particular after partially unscrewing the levelling screw out of the bore. This can provide both a particularly easy and reliable connection. The mounting stud is preferably provided with at least one second screw thread for engaging the nut.

The hardenable grout is preferably at least partially hardened before the levelling screw is partially unscrewed out of the bore. Hardening can include any suitable method of activating the hardening mechanism of the hardenable grout. In a particularly easy to perform embodiment, it could include allowing a certain hardening time to elapse. The hardening can further improve support of the levelling screw and thus performance. A complete hardening might also be envisaged, but it has been found that only partial hardening might be sufficient.

A levelling screw can, in particular, be used in a method according to the invention. In particular, the leveling screw comprises:
- an attachment part support for supporting an attachment part,
- a shank, which projects from the attachment part support on a first side of the attachment part support,
- at least one first screw thread that is provided on the shank, and
- a mounting stud for penetrating the attachment part, which mounting stud projects from the attachment part support on a second side of the attachment part support, wherein the first side and the second side are opposite sides of the attachment part support.

In particular, the at least one first screw thread is a concrete tapping and/or masonry tapping thread, i.e. it has properties, in particular hardness, to imprint a mating thread into a concrete or masonry substrate, respectively. In some embodiments, the mating thread in the base that corresponds to the at least one thread might be partly pre-tapped by a separate tapping tool before the shank is screwingly inserted into the bore.

Features that are described here in connection with the method can also be used in connection with the levelling screw and features that are described here in connection with the levelling screw can also be used in connection with the method.

In particular, the attachment part support can project radially over the mounting stud, so as to provide a geometric stop for the attachment part. Preferably, the attachment part support is a flange, in particular a disc shape flange. This can provide particularly good support at low manufacturing effort. The attachment part support project, preferentially, radially also over the shank and/or the at least one first screw thread.

At least one second screw thread for attaching a nut to the mounting stud can advantageously be provided on the mounting stud. As already hinted at above, this can provide particular good and reliable engagement of the attachment part.

A drive can preferably be provided on the mounting stud. The drive can e.g. be a hex drive and/or can be provided at a rear end of the mounting stud. In particular, the drive can be configured as described in connection with the method above.

A ratio of the maximum outer thread diameter of the at least one first screw thread to the pitch of the at least one first screw thread can be between 1 and 2, in particular between 1.2 and 1.6, at least in some regions of the at least one first screw thread, more preferably at least in some regions of the at least one first screw thread located near the tip end of the shank, most preferably throughout the at least one first screw thread. These are typical dimensions for concrete and/or masonry tapping screw threads.

The shank and the mounting stud are preferably monolithic, i.e. they consist of one piece, without joints or seams. This can be advantageous in view of manufacturing. For example, the shank and the mounting stud can be formed by rolling and/or upsetting a piece of wire. On the other hand, the shank and the attachment part support are preferably non-monolithic with respect to one another. Accordingly, the shank is separate from the attachment part support, and these pieces are joined together as separate parts. The mounting stud and the attachment part are thus preferably also non-monolithic with respect to one another. Providing the attachment part support as a separate part can again be advantageous in view of manufacturing. It is particularly preferred that the attachment part support is a washer that rests on a shoulder provided on the shank. This can allow particularly efficient manufacturing. Preferentially, the shoulder is conical, for particularly good centering of the attachment part support.

The invention is explained in greater detail below with reference to preferred exemplary embodiments, which are depicted schematically in the accompanying drawings.

Figures 1 to 6 schematically illustrate subsequent steps of a method for installing an attachment part using a levelling screw.

Figure 7 schematically illustrates an alternative embodiment of a levelling screw that can be used for the method shown in figures 1 to 6.

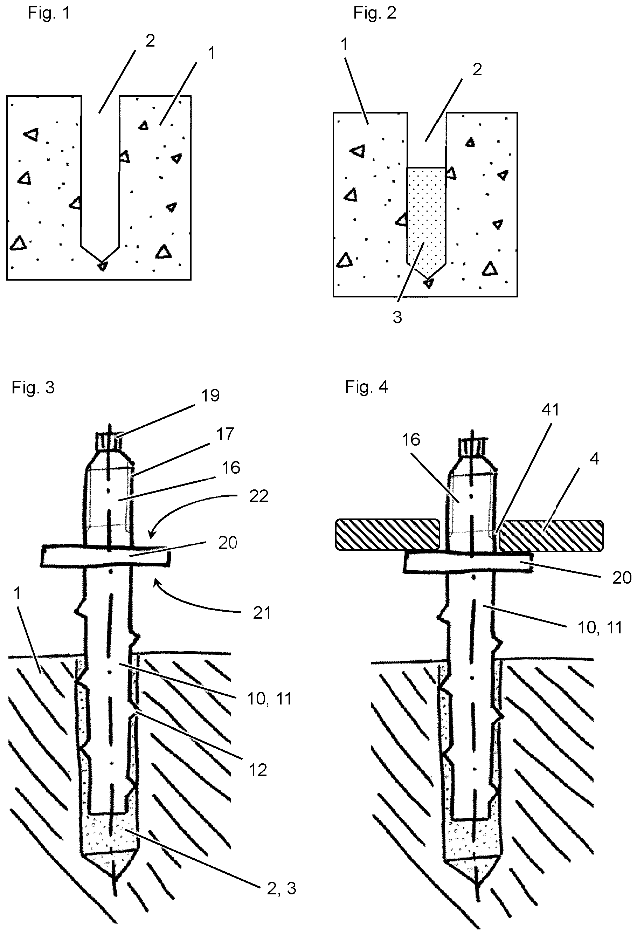

As can be taken from figure 1, the method sequence starts with a base 1, which consists of concrete or masonry, and which has at least one bore 2 provided therein. The bore 2 could e.g. be formed by drilling the base 1.

As shown in figure 2, a quantity of hardenable grout 3 is then placed within the bore 2. For example, the grout 3 could be a two-component grout, and it can be placed within the bore 2 in a mixed state or in an unmixed state (i.e. in the form of two separate components).

A levelling screw 10 is then provided. The levelling screw 10 comprises an attachment part support 20 which is intended to prop up an attachment part 4, such as a column base. In the shown embodiment, the attachment part support 20 is a disc-like, circular flange. However, other shapes, having for example concave or convex surfaces, and/or non-circular outlines, can also be envisaged. The attachment part support 20 provides a rest for the attachment part 4.

The attachment part support 20 has a first side 21 and a second side 22, wherein the first side 21 and the second side 22, respectively, are opposite sides of the attachment part support 20. In the present embodiment, they are flat sides, but as already mentioned, other shapes are also feasible, such as convex shapes.

The levelling screw 10 furthermore comprises a, generally cylindrical, shank 11, which projects from the attachment part support 20 at the first side 21 of the attachment part support 20. The levelling screw 10 furthermore comprises at least one first screw thread 12, which is arranged on the shank 11, and which surrounds the shank 11 in generally helically manner. The first screw thread 12 and the shank 11 can be monolithic, but they could also be separate parts. The first screw thread 12 can be strictly helical, or also deviate from a strict mathematical helix. It can be continuous, but also broken, for example in order to provide cutting teeth. The first screw thread 12 is able to tap, in particular cut, a corresponding mating thread in the concrete or masonry base 1. The first screw thread 12 has an outer thread diameter dₜᵣ. At least near the tip end of the shank 11, a ratio of the maximum outer thread diameter dₜᵣ of the first screw thread 12 to the pitch pₜᵣ of the first screw thread 12 is between 1 and 2, in particular between 1.2 and 1.6. At least one additional screw thread might be provided on the shank 11 for additional functionality. The attachment part support 20 radially projects over the shank 11 and thus forms a shoulder at the rear end of the shank 11.

The levelling screw 10 furthermore comprises a, generally cylindrical, mounting stud 16, which projects from the attachment part support 20 at the second side 22 of the attachment part support 20. The mounting stud 16 is intended to be plugged into an attachment part hole 41 that is provided within the attachment part 4, wherein the attachment part hole 41 is in particular a through hole. The attachment part support 20 radially projects over the mounting stud 16 and thus forms a shoulder at the front end of the mounting stud 16. This shoulder is intended for delimiting plugging of the mounting stud 16 into the attachment part hole 41, and the shoulder thus forms a support for the attachment part 4 when the mounting stud 16 is located within the attachment part hole 41.

The mounting stud 16 is provided with at least one second screw thread 17. The second screw thread 17 is intended for screwingly receiving a nut 9, which nut 9 locks the attachment part 4 against the attachment part support 20.

The mounting stud is provided with a drive 19, which is intended for mating with a torqueing tool for imparting torque in the mounting stud 16 and thus on the entire levelling screw 10. In the present case, the drive 19 is provided at the rear end of the mounting stud 16, which is that end of the mounting stud that is distal with respect to the attachment part support 20. This provides particularly good access. In the present embodiment, the drive 19 is, by way of example, an external hex drive, but other drive shapes can also be used, which mate with the intended torqueing tool. Alternatively or additionally, the attachment part support 20 could form a drive for mating with a torqueing tool.

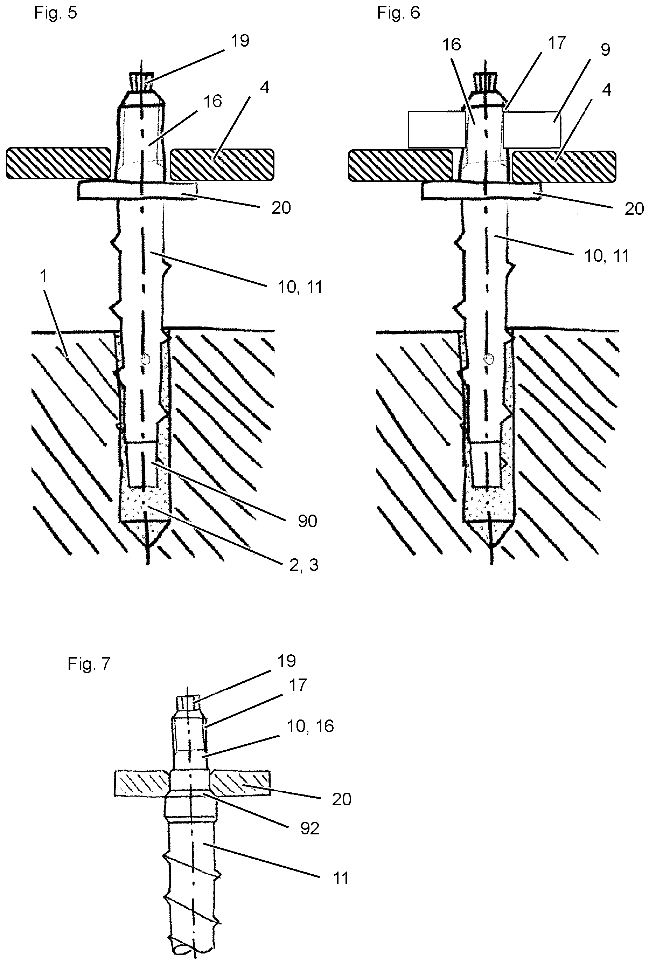

In particular, the mounting stud 16 and the shank 11 are arranged coaxially. The attachment part support 20 is located, axially, between the shank 11 and the mounting stud 16. In the present embodiment, the mounting stud 16, the shank 11 and the attachment part support 20 are monolithic, but separate parts could also be envisaged. In particular, as shown in figure 7, an embodiment of a levelling screw 10 can be envisaged in which the mounting stud 16 and the shank 11, and possibly also the respective screw threads, are monolithic, whereas the attachment part support 20 is a separate part (for example a washer), which for example rests on a ring shoulder 92 provided on the shank 11 or/and the mounting stud 16. Preferentially, the shoulder 92 is conical, for particularly good centering of the attachment part support 20. A flat shoulder 92 embodiment can however also be envisaged. The levelling screw of figure 7 can be used as an alternative to the levelling screw shown in figures 3 to 6 when performing the method of figures 1 to 6.

The shank 11 of the levelling screw 10 is screwed into the bore 2 in the base 1 by rotating the levelling screw 10 in a screw-in direction, preferably by imparting torque on the drive 19, which causes the first screw thread 12 to engage the base 1 and to tap a mating thread into the base 1, and which causes the shank 11 to dip into the hardenable grout 3. In case where the grout 3 is a multi-component grout 3 which has been previously inserted into the bore 2 in an unmixed state, dipping-in of the shank 11 will cause initial mixing of the grout 3. In any case, dipping-in causes displacement of the grout 3 so that the grout 3 forms a grout shell that surrounds the shank 11. The grout 3 is then allowed to at least partially harden, so as to obtain an at least partly hardened grout shell. Depending on the hardening mechanism of the grout 3, this might be achieved by waiting a certain hardening time, or by other means. The resulting configuration is shown in figure 3.

An attachment part 4 is then placed on the attachment part support 20. More particularly, the mounting stud 16 of the levelling screw 10 is inserted into and led through the attachment part hole 41 in the attachment part 4, until the attachment part 4 abuts on the attachment part support 20. The mounting stud 16 has a greater length as compared to the attachment part hole 41, so that the drive 19 sticks out of the attachment part hole 41 when the attachment part 4 rests on the attachment part support 20.

Subsequently, the levelling screw 10 is partly unscrewed out of the bore 2 and out of the hardened grout shell, by rotating the levelling screw 10 in a direction of rotation opposite to the screw-in direction, preferably by imparting torque on the drive 19, which drive 19 sticks out of the attachment part hole 41. This rises the attachment part 4 that rests on the attachment part support 20 away from the base 1 and therefore allows levelling of the attachment part 4. In particular, unscrewing of the levelling screw 10 out of the bore 2 might result in a cavity 90 being formed in the grout shell. The resulting configuration is shown in figure 5.

The levelling screw 10 can then be further screwed-out or screwed back into the bore 2, repeatedly if necessary, until the desired levelling of the attachment part 4 is achieved. Nut 9 is then screwed onto the second screw thread 17 provided on the mounting stud 16 so as to lock the attachment part 4 between the nut 9 and the attachment part support 20. The resulting configuration is shown in figure 6.

## Claims

1. Method for installing an attachment part (4) on a concrete or masonry base (1), which base (1) is provided with a bore (2), in which
- a hardenable grout (3) is arranged within the bore (2),
- a levelling screw (10), which has an attachment part support (20) for supporting the attachment part (4), a shank (11), which is connected to the attachment part support (20), and at least one first screw thread (12), which is arranged on the shank (11), is provided,
- the shank (11) is screwingly inserted into the bore (2) and into the hardenable grout (3) that is arranged within the bore (2), wherein the at least one first screw thread (12) taps the base (1) as the shank (11) is screwingly inserted into the bore (2), and
- the attachment part (4) is placed on the attachment part support (20),
**characterized in that**
- following the insertion of the shank (11) into the bore (2) and into the hardenable grout (3) that is arranged within the bore (2), the levelling screw (10) is partially unscrewed out of the bore (2), thereby raising the attachment part support (20) away from the base (1).

2. Method according to claim 1,
**characterized in that**
the attachment part (4) is placed on the attachment part support (20) before the levelling screw (10) is partially unscrewed out of the bore (2).

3. Method according to any of the preceding claims,
**characterized in that**
the levelling screw (10) has a mounting stud (16), and the mounting stud (16) is arranged in an attachment part hole (41) that is provided within the attachment part (4).

4. Method according to claim 3,
**characterized in that**
a drive (19) is provided on the mounting stud (16), wherein insertion of the shank (11) into the bore (2) and into the hardenable grout (3) that is arranged within the bore (2) includes rotating the levelling screw (10) by imparting torque on the drive (19).

5. Method according to any of claims 3 or 4,
in which
a nut (9) is placed on the mounting stud (16) so as to clamp the attachment part (4) in between the attachment part support (20) and the nut (9).

6. Method according to any of the preceding claims,
**characterized in that**
the hardenable grout (3) is at least partially hardened before the levelling screw (10) is partially unscrewed out of the bore (2).

## Patentansprüche

1. Verfahren zum Montieren eines Anbauteils (4) auf einem Beton- oder Mauerwerkssockel (1), wobei der Sockel (1) mit einer Bohrung (2) versehen ist, wobei
- ein härtbares Vergussmaterial (3) innerhalb der Bohrung (2) angeordnet ist,
- eine Nivellierschraube (10), die eine Anbauteilstütze (20) zum Stützen des Anbauteils (4), ein Schaft (11), der mit der Anbauteilstütze (20) verbunden ist, und mindestens ein erstes Schraubgewinde (12), das an dem Schaft (11) angeordnet ist, bereitgestellt sind,
- der Schaft (11) in die Bohrung (2) und in das härtbare Vergussmaterial (3), das innerhalb der Bohrung (2) angeordnet ist, eingeschraubt wird, wobei das mindestens eine erste Schraubgewinde (12) beim Einschrauben des Schaftes (11) in die Bohrung (2) den Sockel (1) durchschneidet, und
- das Anbauteil (4) auf der Anbauteilstütze (20) platziert wird,
**dadurch gekennzeichnet, dass**
- nach dem Einführen des Schaftes (11) in die Bohrung (2) und in das härtbare Vergussmaterial (3), das innerhalb der Bohrung (2) angeordnet ist, die Nivellierschraube (10) teilweise aus der Bohrung (2) herausgeschraubt wird, wobei dadurch die Anbauteilstütze (20) von dem Sockel (1) abgehoben wird.

2. Verfahren nach Anspruch 1,
**dadurch gekennzeichnet, dass**
das Anbauteil (4) auf der Anbauteilstütze (20) platziert wird, bevor die Nivellierschraube (10) teilweise aus der Bohrung (2) herausgeschraubt wird.

3. Verfahren nach einem der vorstehenden Ansprüche,
**dadurch gekennzeichnet, dass**
die Nivellierschraube (10) einen Befestigungszapfen (16) aufweist und der Befestigungszapfen (16) in einem Anbauteilloch (41) angeordnet ist, der innerhalb des Anbauteils (4) bereitgestellt ist.

4. Verfahren nach Anspruch 3,
**dadurch gekennzeichnet, dass**
ein Antrieb (19) an dem Befestigungszapfen (16) bereitgestellt ist, wobei das Einführen des Schafts (11) in die Bohrung (2) und in das härtbare Vergussmaterial (3), das innerhalb der Bohrung (2) angeordnet ist, ein Drehen der Nivellierschraube (10) durch Aufbringen eines Drehmoments auf den Antrieb (19) einschließt.

5. Verfahren nach einem der Ansprüche 3 oder 4,
wobei
eine Mutter (9) auf dem Befestigungszapfen (16) platziert ist, um das Anbauteil (4) zwischen der Anbauteilstütze (20) und der Mutter (9) einzuklemmen.

6. Verfahren nach einem der vorstehenden Ansprüche,
**dadurch gekennzeichnet, dass**
das härtbare Vergussmaterial (3) mindestens teilweise ausgehärtet ist, bevor die Nivellierschraube (10) teilweise aus der Bohrung (2) herausgeschraubt wird.

## Revendications

1. Procédé pour l'installation d'une pièce de fixation (4) sur une base (1) en béton ou en pierre, ladite base (1) est pourvue d'un alésage (2), dans lequel
- un coulis de ciment durcissable (3) est disposé dans l'alésage (2),
- une vis de mise à niveau (10), laquelle présente un support pour pièce de fixation (20) permettant de supporter la pièce de fixation (4), une tige (11) qui est reliée au support pour pièce de fixation (20) et au moins un premier filetage de vis (12) qui est disposé sur la tige (11), est fournie,
- la tige (11) est insérée par vissage dans l'alésage (2) et dans le coulis de ciment durcissable (3) qui est disposé dans l'alésage (2), dans lequel l'au moins un premier filetage de vis (12) vient en contact avec la base (1) lorsque la tige (11) est insérée par vissage dans l'alésage (2), et
- la pièce de fixation (4) est placée sur le support pour pièce de fixation (20),
**caractérisé en ce que**
- après l'insertion de la tige (11) dans l'alésage (2) et dans le coulis de ciment durcissable (3) qui est disposé dans l'alésage (2), la vis de mise à niveau (10) est partiellement dévissée hors de l'alésage (2), soulevant ainsi le support pour pièce de fixation (20) pour l'éloigner de la base (1).

2. Procédé selon la revendication 1,
**caractérisé en ce que**
la pièce de fixation (4) est placée sur le support pour pièce de fixation (20) avant que la vis de mise à niveau (10) ne soit partiellement dévissée hors de l'alésage (2).

3. Procédé selon l'une quelconque des revendications précédentes,
**caractérisé en ce que**
la vis de mise à niveau (10) présente un goujon de montage (16), et le goujon de montage (16) est disposé dans un trou de pièce de fixation (41) qui est prévu à l'intérieur de la pièce de fixation (4).

4. Procédé selon la revendication 3,
**caractérisé en ce que**
un entraînement (19) est prévu sur le goujon de montage (16), dans lequel l'insertion de la tige (11) dans l'alésage (2) et dans le coulis de ciment durcissable (3) qui est disposé dans l'alésage (2) comporte la rotation de la vis de mise à niveau (10) par l'application d'un couple sur l'entraînement (19).

5. Procédé selon l'une quelconque des revendications 3 ou 4,
dans lequel
un écrou (9) est placé sur le goujon de montage (16) de manière à serrer la pièce de fixation (4) entre le support pour pièce de fixation (20) et l'écrou (9).

6. Procédé selon l'une quelconque des revendications précédentes,
**caractérisé en ce que**
le coulis de ciment durcissable (3) est au moins partiellement durci avant que la vis de mise à niveau (10) ne soit partiellement dévissée hors de l'alésage (2).
